# EUROPEAN PATENT SPECIFICATION

(11) **EP 4 150 127 B1**
(45) Date of publication and mention of the grant of the patent: **08.10.2025**
(21) Application number: 21728991.7
(22) Date of filing: 13.05.2021
(51) Int. Cl.: C14C 15/00, B05B 16/00, C09D 175/16, C14B 1/58, C14B 7/02

(54) **FINISHING METHOD AND SYSTEM FOR TANNED OR SYNTHETIC HIDES**
APPRETURVERFAHREN UND SYSTEM FÜR GEGERBTE ODER SYNTHETISCHE HÄUTE
MÉTHODE DE FINISSAGE ET SYSTÈME POUR PEAUX TANNÉS OU SYNTHÉTIQUES

(30) Priority: 13.05.2020 IT 202000010873
(43) Date of publication of application: 22.03.2023
(73) Proprietor: Todesco S.r.l., 36051 Creazzo (VI) (IT)
(72) Inventor: TODESCO, Paolo, 36050 Monteviale (VI) (IT); TODESCO, Giorgio, 36051 Creazzo (VI) (IT)
(74) Representative: Autuori & Partners S.R.L.
(86) International application number: PCT/IB2021/054102
(87) International publication number: WO 2021/229493

(56) References cited:
- WO-A1-2014/096910
- GB-A- 366 571
- US-A- 1 789 550
- US-A- 5 048 455
- DATABASE WPI Week 201871, Derwent World Patents Index; AN 2018-77956B, XP002800924

## Description

### Technical field

The present invention generally relates to the technical field of industrial processing of animal leather or leather of animal origin, and it particularly relates to a method and a line for finishing leather, whether animal, of animal origin or synthetic.

### Definitions

In the present document, the expression "hide" or "leather" is used to indicate any layer, whether it be grain, crust or sub-crust, of the leather of an animal, in particular of a bovine, but also of sheep/goats, exotic, fur, wild animals or others.

In the present document, "a leather" or "the leather" is used to indicate at least one part of the leather of a single animal, which may therefore be of any shape. For example, the leather may be whole leather, half leather, shoulders, hunch, back, hips, rear or front parts of the body.

In the present document, the expression "size of the leather" therefore is used to indicate the size of the surface area of a leather once laid on a plane.

In the present document, the expression "animal leather or leather of animal origin" is used to indicate the so-called "genuine leather", the so-called "leatherette" or "faux leather" or other similar composite products containing animal leather.

In the present document, the expression "synthetic leather" or derivatives is used to indicate a synthetic non-animal medium or medium of animal support whose external appearance is similar to animal leather or leather of animal origin.

In the present document, the expression "providing" or derivatives thereof is used to indicate the preparation of an element of interest to a process step of interest, thus including any preventive treatment aimed at the optimal execution of the step of interest, from simple collection and possible storage to heat and/or chemical and/or physical pre-treatments and the like.

### State of the Art

It is known that animal leather is subjected to several processes.

Generally, these processes are divided into three processing groups: beamhouse processing (typically: soaking, liming, depilation, skiving, splitting, decalcification, maceration and pickling), tanning and post tanning (typically: skiving, splitting, shaving, dyeing, fattening, drying, possibly staking and/or nailing, finishing, ironing, pressing and measuring).

The processes subsequent to tanning, and in particular finishing processes, therefore have the purpose of improving the aesthetic and/or product class characteristics of the leather. Generally, the finishing takes place on substantially dry leather, that is leather that has undergone a drying process, for example by means of a vacuum plant.

There are various types of finishing techniques, among which the most used is the spray technique.

A typical spray finishing line includes one or more spray booths and one or more drying tunnels.

In spray booths, mixtures of organic solvent and/or water and chemical substances suitable to confer the aforementioned aesthetic and/or product class characteristics to the leather are sprayed onto the leather. In order to cause the chemical reactions for the polymerisation of such substances and the removal of water and/or solvent, tunnels generally operate at 80 °C - 140 °C.

A drawback of such processing consists in exposing the leather to high temperatures, which entails a deterioration of the collagen present in the leather, which causes a shrinking of the fibre and, therefore, both a reduction in the dimensions and a hardening of the leather.

More generally, the processing of leather at high temperatures compromises the quality of the leather itself.

Furthermore, due to the high temperatures, this processing method requires a high amount of energy and rather long treatment times, with evident repercussions in economic terms.

From US 5048455 a process is known having of the features of the preamble of the independent claim 1.

### Summary of the invention

An object of the present invention is to at least partly overcome the drawbacks illustrated above, by providing a leather finishing method that is highly functional and cost-effective.

Another object of the invention is to provide a leather finishing method that allows to obtain a high-quality product.

Another object of the invention is to provide a leather finishing method that allows a limited or no reduction in the size of the leather during the processing.

Another object of the invention is to provide a leather processing method that is particularly fast.

Another object of the invention is to provide a leather processing method that allows to minimise the process costs.

These and other objects which will be more apparent hereinafter, are attained by a method according to claim 1.

The dependent claims describe advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIGS. 1A** and **1B****,** **2A** and **2B****,** **3A** and **3B** are schematic axonometric views of some embodiments of a polymerisation station **10** in different operative steps;
**FIGS. 4** to **8** are schematic axonometric views of further embodiments of the polymerisation station **10;**
**FIG. 9** is a schematic axonometric view of a device **100;**
**FIG. 10** is a schematic view of a finishing line **1.**

### Detailed description of some preferred embodiments

With reference to the attached figures, herein described is a method for finishing leather **P,** which may preferably be processed by means of a continuous finishing line **1,** which may include a station **S** for depositing a product on the leather **P** and a polymerisation station **10,** better described hereinafter.

Although the present description generally relates to leather, it is clear that it can be animal leather, leather of animal origin or synthetic leather without departing from the scope of protection of the attached claims.

The deposition deposits one or more layers of product on the leather in a scattered and non-point manner. Possibly, the deposition will be carried out homogeneously.

The deposition is carried out in station **S** by spraying with suitable guns or by means of roller machines, spreading machines or buffer machines.

In this manner, the operation for finishing the leather **P** will be carried out in a fast, practical and cost-effective manner.

In any case, the finishing may be carried out on the substantially dry leather **P,** that is leather that has undergone a drying process, for example by means of a vacuum plant.

Depending on the needs, one may process a face or both faces of the leather **P.**

Even though hereinafter reference will generally be made to leather **P,** it is clear that it is possible to process a single leather or a plurality of leathers without departing from the scope of protection of the attached claims.

The method according to the present invention comprises a step for providing the leather **P** and subsequent irradiation thereof with ultraviolet rays (UV rays), possibly in a working chamber **25.** When carrying out the irradiation step the leather **P** comprises a photopolymerisable composition which can be activated by means of UV rays.

The photopolymerisable composition is deposited on the leather **P** in the station **S,** for example in an amount comprised between 10 g/m² and 150 g/m².

The photopolymerisable composition is an aqueous solution or dispersion consisting of:
(A) at least one photopolymerisable compound;
(B) at least one photoactivating agent;
(C) possibly, at least one crosslinking agent;
(D) possibly, at least one pigmenting agent;
(E) possibly, at least one further additive.

Advantageously, the water in the aqueous solution or dispersion may be present in a percentage comprised between 10% by weight to 50% by weight with respect to the total weight of the aqueous solution or dispersion, preferably comprised between 15% by weight and 45% by weight with respect to the total weight of the aqueous solution or dispersion, and even more preferably comprised between 20% by weight and 40% by weight with respect to the total weight of the aqueous solution or dispersion.

The relatively high presence of water allows the composition to be deposited on the leather **P** at high speeds, preferably continuously by spraying.

For environmental reasons, the aqueous solution or dispersion may be devoid of organic solvent.

Suitably, the at least one photopolymerisable compound may be selected from: acrylates, epoxy acrylates, polyether acrylates, polyether acrylates, polyurethane acrylates, polyether, silicone, polyurethane polymers or copolymers, polyurethanes with polyether polyol, butadiene copolymers.

On the other hand, the at least one photoactivating agent may be selected from aromatic ketones, such as for example as benzophenone or 1-hydroxycyclohexyl phenyl ketone.

The presence of the at least one crosslinking agent may be particularly advantageous. If present, such at least one crosslinking agent may for example be carbodiimide or isocyanate.

Pigments for imparting the desired colouring to the leather and possibly also other additives, such as fillers, stabilisers, for example surfactants, all known to the person skilled in the art, may be suitably present.

Irradiation by means of UV rays causes the polymerisation of the composition, so as to finish the leather **P.**

Such finishing may change the physical state of the leather. For example, the surface of the leather **P** may be prepared for a subsequent painting or for a subsequent surface treatment.

The finishing may allow to define the aesthetic and/or product class characteristics of the leather. In particular, at least one surface layer of the leather **P** may be processed so as to define the durability, colour and/or finish characteristics of the leather **P.**

Furthermore, thanks to the finishing, the leather **P** may have particular characteristics such as a particular texture, colour tone, waterproofing.

Thanks to the use of UV rays, there will be no need for working at high temperatures to polymerise the chemical finishing substances so as to obtain high quality leather **P.** Furthermore, dimensional reduction of the leather **P** will be limited or absent.

If necessary, during irradiation the working chamber **25** may be heated at relatively low temperatures.

Such temperature may be lower than 60 °C, preferably lower than 55 °C, and possibly lower than 40 °C.

More particularly, such temperature may preferably be comprised between 20°C and 50°C.

Processing at low temperatures allows to have low energy consumption. Furthermore, there is no need for particular expensive and cumbersome protections, for example thermal insulation of the polymerisation station **10,** so that the latter is particularly safe.

Suitably, the leather **P** to be processed may be hit by UV rays for a predetermined time interval. The time interval may vary depending on the power of the UV rays and/or depending on the leather **P** to be processed and/or depending on the substances to be activated.

In particular, the time and/or intensity may be particularly low in the presence of a suitable activation/inhibition system. For example, the irradiation time may be less than 3 minutes. Preferably, the irradiation time may be less than 30 seconds, even more preferably about 10 seconds.

More particularly, the irradiation step may be carried out for a working time comprised between 1 sec and 60 sec, more preferably comprised between 2 sec and 45 sec and even more preferably comprised between 5 sec and 30 sec.

The method according to the present invention may be carried out continuously or discontinuously.

Advantageously, the photopolymerisable composition may be polymerised by means of a polymerisation station **10,** which may comprise a working chamber **25** with a working area **11** designated to house the leather **P** to be processed and means **12** for loading and means **13** for unloading the leather into/from the working area **11.**

The polymerisation station **10** may therefore comprise an inlet **21** and an outlet **22** to allow the loading and unloading of the leather **P** into/from the working area **11.**

Preferably, the polymerisation station **10** may comprise a support structure **20.** In particular, the latter may comprise one or more openings defining the inlet **21** and the outlet **22.** Possibly, the inlet **21** and the outlet **22** may coincide.

Suitably, the polymerisation station **10** may comprise means **40** for the emission of UV rays positioned in such a way that the UV rays hit the leather **P** arranged in the working area **11.** Preferably, the means **40** may be arranged inside the working area **11.**

The means **40** may be one or more UV-ray generating devices of the per se known type. For example, UV lamps of the per se known type may be used.

Advantageously, such lamps may include a plurality of LEDs. In this manner, the costs for supplying the means **40** will be minimised.

Suitably, these LEDs may be configured to emit UV rays with a wavelength comprised between 280 nm and 400 nm. This will allow to prevent the formation of harmful gases in the working chamber **25.**

In a preferred but non-exclusive embodiment, a station **S** for depositing the photopolymerisable composition on the leather **P** may be provided for upstream of the polymerisation station **10.**

Advantageously, such deposition station **S** may include a spray booth **200** comprising a rotary turntable **210** provided with at least 12 arms **220,** and preferably with a number of arms comprised between 14 and 24.

Each arm **220** may include one or more spraying guns **230.**

An example of a spray booth **200** provide with 24 arms is known from Italian patent 102015000039515.

In the station **S** the deposition may be carried out by hand spraying, spraying with slidable guns, roller, glazing or buffer.

Suitably, a conveyor belt **29** or motor-driven rollers **29'** may be provided for the leather **P** so that the leather **P** sequentially passes first through the spray booth **200** and then through the polymerisation station **10.** In this manner, the steps for depositing the photopolymerisable composition and irradiating the leather **P** may be carried out continuously.

In a preferred but non-exclusive embodiment, the finishing line **1** may provide for a first and a second spray booth **200, 200'** and a first and second polymerisation station **10, 10',** alternating with respect to each other.

In this manner, a first deposition - on the leather **P** - of a first photopolymerisable composition may be carried out in the first booth **200,** which may be subsequently at least partially polymerised in the first station **10.**

This will allow to create - on the leather **P** - a first at least partially polymerised "bottom" layer **L1,** suitable to prepare them for the subsequent processes.

The leather **P** comprising the first layer **L1** may be inserted into the second booth **200',** in which a second photopolymerisable composition may be deposited above the layer **L1.** The latter will then be at least partially polymerised in the second station **10'.**

This will allow to create a second finishing layer **L2** on the layer **L1.**

The two photopolymerisable compositions may be different depending on the needs and characteristics to be conferred to the leather **P,** but they may still have the aforementioned formulation.

Possibly, as mentioned above, the polymerisation station **10** may comprise heating means **30** acting on the leather **P** to bring the working chamber **25** to the aforementioned temperatures with the aim of eliminating the water or the solvent.

The heating means **30** may be of different types. For example, the means **30** may be an infrared ray (IR rays) lamp, electrical resistors, steam, oil, gas or hot water heat exchangers or the like of the per se known type.

Preferably, but not exclusively, the IR lamp **30** may be arranged inside the working area **11.**

The IR lamp **30** may be selectively activatable manually, for example by an operator by means of a switch, or automatically, for example following the detection of the presence of the leather **P** in the working area **11.** Such detection may be carried out in a per se known manner by means of detection sensors.

Suitably, the IR lamp **30** may be configured so that the working temperature does not exceed a certain limit temperature.

Suitably, there may be provided for sensor means of the per se known type operatively connected to the IR lamp **30** so that the latter is automatically activated/deactivated to maintain the temperature below the limit temperature.

It is clear that the duration of the step for irradiating by means of UV lamps **40,** as well as of the steps for heating by means of IR lamps **30** and the spraying of the substances to be activated, may vary depending on the needs, for example depending on the processing speed and/or the type of leather **P.**

The support structure **20** may comprise a support plane **23** suitable to support the leather P during use, that is during all or at least a part of the processing of the leather **P.**

Suitably, the working area **11** may be different in size depending on the preferences. In particular, the support plane **23** may have variable length and/or width depending on the preferences.

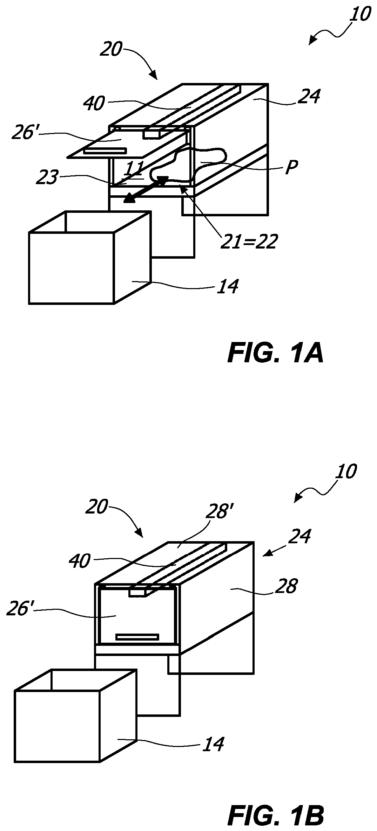

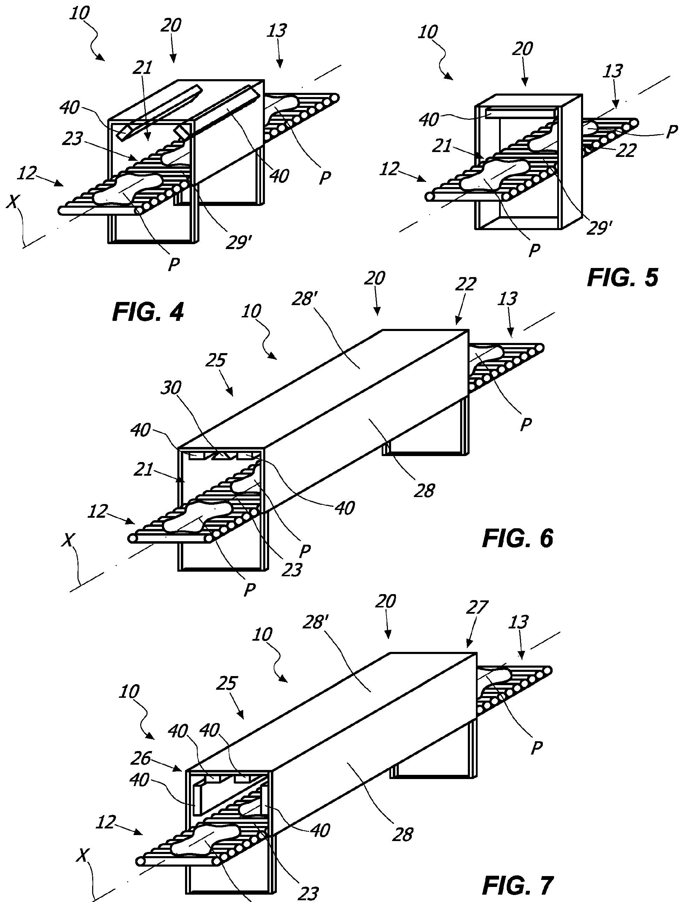

For example, as illustrated in FIGS. 1A, 1B and 4, the support plane **23** may be small in size, for example it may measure about 2m long and about 2m wide, so that the polymerisation station **10** allows to process a single leather **P** at a time. In such case, the polymerisation station **10** may have overall dimensions particularly small in size.

Possibly, as schematically illustrated in FIG. 5, the support structure **20** may be particularly small in size defining a portal overlying the leather **P.**

On the other hand, the support plane **23** may have a width and/or length greater than the dimensions of a single leather **P.** Furthermore, this will allow the polymerisation station **10** to process a plurality of leathers **P** simultaneously.

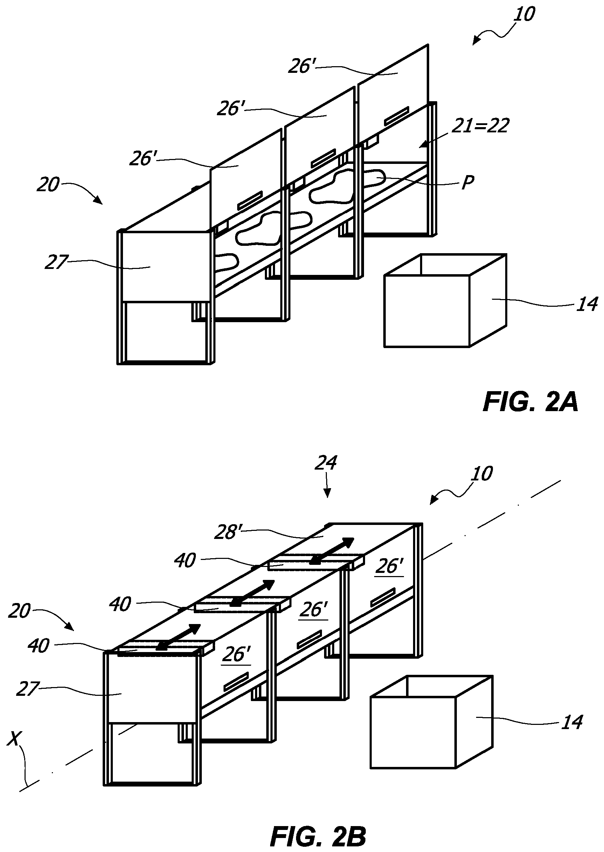

For example, as schematically illustrated in FIGS. 2A, 2B, 3, 6, 7 and 8, the support plane **23** may have a width substantially equal to the width of a leather, about 3 metres, and a variable length depending on the needs, for example about 12 m.

In this case, the support structure **20** may have a substantially longitudinal extension defining an axis **X.**

Suitably, means **29** for causing the advancement of the leather **P** in the working area **11** may be provided for. In particular, the means **29** may cause the advancement of the leather **P** along the work plane **23.** For example, there may be provided for a conveyor belt, a plurality of planes or motor-driven rollers **29'** or the like of the per se known type. The conveyor belt or the rollers **29'** may define the work plane **23.**

It is clear that the leather **P** may be displaced in the polymerisation station **10** in a different manner without departing from the scope of protection of the present invention. For example, the means **29** may comprise a chain system or other systems known in the industry.

According to a particular embodiment, the working area **11** may be substantially closed during use.

In particular, the working area **11** may be substantially closed during the entire processing step or only during some sections of the processing step. For example, should the processing provide for the irradiation and heating step, the working area **11** may be opened during the irradiation step and it may be closed during the heating step, or it may be closed/opened during both steps.

Suitably, the support structure **20** may comprise a cover **24** overlying the support plane **23** and cooperating with the latter to define the working area **11.**

Possibly, the support structure **20** may be moveable between a closed configuration (FIGS. 1B, 2B 3B) in which the working area **11** is closed, and an open configuration (FIGS. 1A, 2A 3A) in which the working area **11** is open to allow the loading/unloading of the leather into/from the working area **11.**

In a preferred but non-exclusive embodiment, the support structure **20** may substantially define a tunnel **25.** The tunnel **25** may have a pair of side walls **28** and an upper wall **28'** so that the cover **24** is substantially rectangular-shaped and the working area **11** is substantially parallelepiped-shaped.

It is clear that such embodiment is not exclusive. As a matter of fact, the cover **24** may have different configurations, for example it may be substantially circular or hemispherical-shaped.

Furthermore, the cover **24** may be substantially continuous or it may comprise one or more openings, or it may have a reticular structure and it may, for example, be made by means of trestles or tubular elements.

The tunnel **25** may have the inlet **21** and the outlet **22.** Suitably, panels or doors **26'** positioned at the inlet **21** and/or at the outlet **22,** which may be selectively openable so as to allow the support structure **20** to pass from the open configuration to the closed configuration, may be provided for.

For example, schematically illustrated in FIGS. 1A and 1B, there may be provided for a door **26'** arranged at the inlet **21,** rotatably moveable between an open position and a closed position. It is clear that the inlet **21** and the outlet **22** may coincide so as to allow both the loading and unloading of the leather **P.**

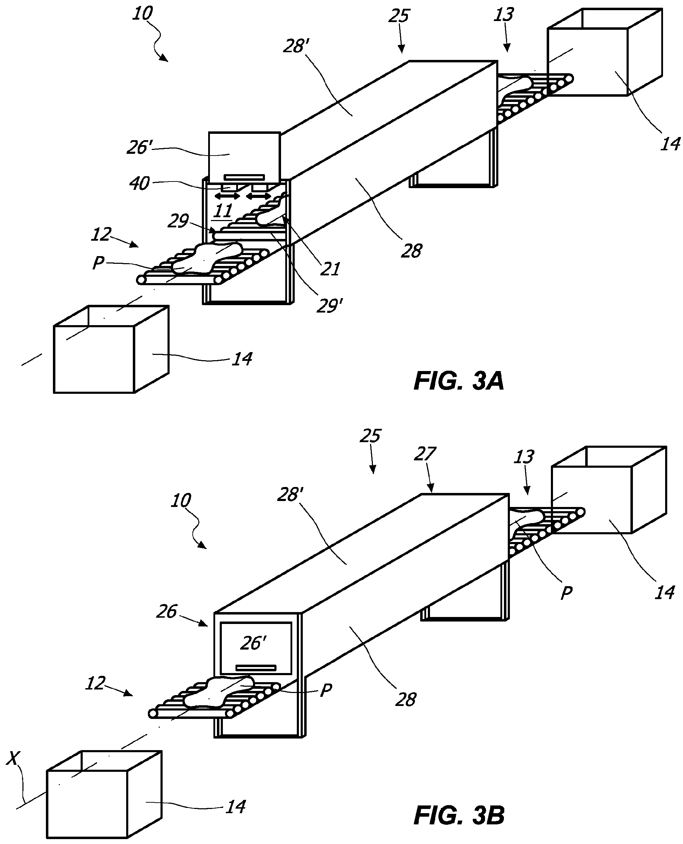

According to different embodiments, the tunnel **25** may have the inlet **21** and the outlet **22** arranged at the ends **26, 27** thereof as schematically shown in FIGS. 3A and 3B, or it may have the inlet **21** and the outlet **22** and corresponding panels **26'** arranged at the side walls of the cover **24,** as schematically shown in FIGS. 2A and 2B.

In this case, the panels **26'** may be slidable. However, it is clear that such panels **26'** may be of any type.

Suitably, the advancement means **29** may cause the advancement of the leather **P** in the tunnel **25** between the end **26** and the end **27** thereof.

According **to** a different embodiment, the working area **11** may be substantially open during use. For example, schematically illustrated in FIGS. 4, 6, 7 the tunnel structure **25** may have the side walls **28** and it may be without the panels **26', 27'** at the ends **26, 27** so that the inlet **21** and the outlet **22** are always open.

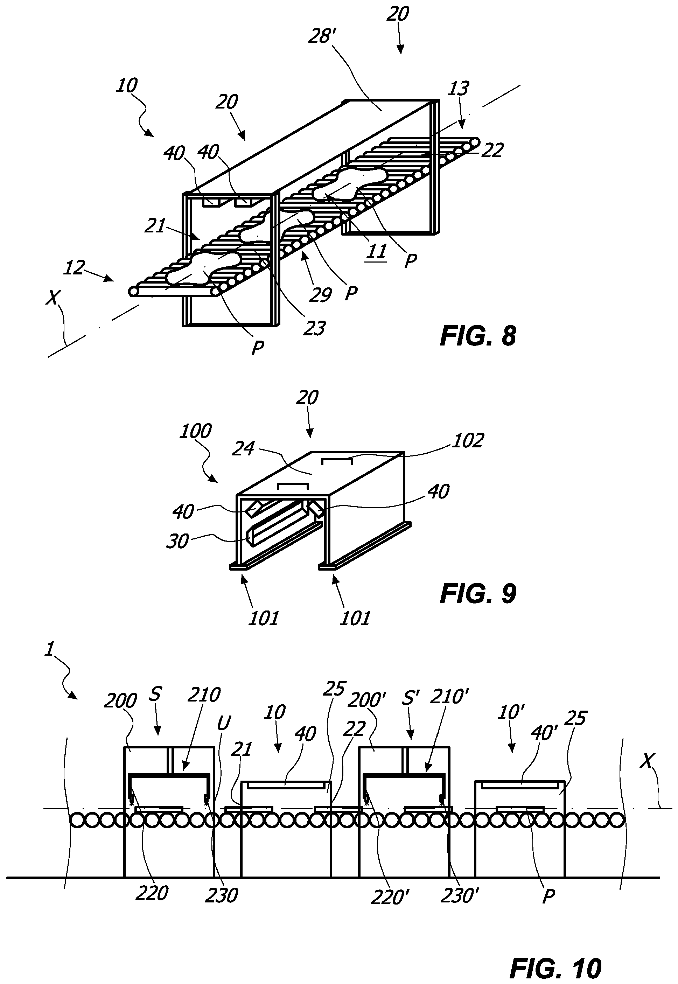

Possibly, according to a different embodiment, the support structure **25** may be without continuous side walls **28,** as schematically illustrated in FIG. 8. In this case the cover 24 may be substantially discontinuous, for example it may be a tubular or reticular structure.

As mentioned above, the polymerisation station **10** may operate continuously or discontinuously.

For example, as schematically illustrated in FIGS. 1A to 3B, the processing stations may have a substantially discontinuous operation. The loading and/or unloading of the leather **P** may be carried out manually by an operator or automatically, for example by means of suitable loading **12** and/or unloading **13** means.

Possibly, the rollers **29'** may have a length substantially greater than the length of the support structure **20** so that the ends thereof define the loading and/or unloading **12** and **13** means.

Suitably, there may be provided for storage containers **14** arranged at the inlet **21** and/or at the outlet **22** for the leather **P** processed and/or to be processed.

On the other hand, according to a different embodiment, the polymerisation station **10** may have a substantially continuous operation, as schematically illustrated in FIG. 4 to 8.

The polymerisation station **10** may be continuously loaded manually or automatically.

For example, in a finishing line **1** with the polymerisation station **10** arranged subsequently to a station **S,** the inlet **21** of the polymerisation station **10** may coincide with the outlet **U** of the preceding station **S.**

Suitably, there may be provided for a plurality of motor-driven rollers **29'** which may be configured so as to define the loading means **12,** the advancement means **29** and the unloading means **13.** Furthermore, the rollers **29'** arranged inside the support structure **20** may define the support plane **23.**

During the irradiation step, the leather **P** may be substantially stationary or they may slide longitudinally along the axis **X.** On the other hand, the UV lamps **40** may be fixed or they may slide parallel or transversely to the axis **X.**

Even though not shown in the attached figures, the UV lamps **40** may be moveable differently, for example by rotating or varying the distance from the support plane **23.**

FIG. 1A shows a single UV lamp **40** having a length substantially equal to the length of the support plane **23** so that the entire leather is irradiated simultaneously during use. The UV lamp **40** is arranged in a central longitudinal position, that is along the axis **X** and parallel to the support plane **23** so that the rays hit the leather in a substantially perpendicular manner.

FIG. 2A shows three UV lamps oriented transversely with respect to the axis **X** and moveable in a direction substantially parallel to the axis **X.** During irradiation, the leather may be fixed while the UV lamps **40** may be moveable.

On the other hand, in a further embodiment the leather may be moveable while the UV lamps **40** may be fixed.

FIG. 3A shows a plurality of UV lamps **40** arranged in succession so as to form a pair of rows of UV lamps arranged longitudinally along the axis **X.** The rows of UV lamps **40** are positioned so that the rays hit the leather substantially perpendicularly.

FIG. 4 shows a pair of UV lamps **40** arranged longitudinally along the axis **X** having a length substantially equal to the support plane **23** and arranged on opposite sides with respect to the axis **X.** The UV lamps are inclined with respect to the support plane **23** so as to form an angle of about 45° with the latter.

FIG. 5 shows a single UV lamp **40** arranged transversely with respect to the axis **X.** The leather **P** is mobile during the irradiation step.

FIG. 7 shows four UV lamps **40** arranged longitudinally in a manner substantially parallel to the axis **X.**

According to a particular embodiment of the invention, there may be provided for a device **100** for irradiating the leather **P.** In particular, the device **100** may be suitable to be displaced. For example, the device **100** may comprise handles **102** or hooks to facilitate the displacement thereof.

In light of the above, it is clear that the invention attains the pre-set objectives.

The invention is susceptible to numerous modifications and variants, all falling within the scope of protection of the attached claims.

## Claims

1. A method for finishing at least one tanned or synthetic animal leather or leather of animal origin (**P**), comprising at least the steps of:
- providing the at least one leather (**P**) to be finished;
- irradiating the at least one leather (**P**) to be finished with UV rays;
wherein, at the time of said irradiation step, the at least one leather (**P**) comprises at least one photopolymerisable composition which can be activated by means of UV rays;
wherein said provision step comprises at least one step for the deposition - on the at least one leather (**P**) - of the at least one photopolymerisable composition, said irradiation step being carried out subsequently to said deposition step;
**characterized in that** the deposition deposits - on said at least one leather (**P**) - one or more layers of said photopolymerisable composition in a scattered and non-point manner by means of spraying, roller, glazing or buffer, the photopolymerisable composition being an aqueous solution or dispersion consisting of:
(A) at least one photopolymerisable compound;
(B) at least one photoactivating agent;
(C) possibly, at least one crosslinking agent;
(D) possibly, at least one pigmenting agent;
(E) possibly, at least one further additive.

2. Method according to claim 1, wherein said at least one photopolymerisable composition is deposited on the at least one leather (**P**) in an amount comprised between 10 g/m² and 150 g/m².

3. Method according to claim 1 or 2, wherein said provision step comprises at least the steps of:
- first deposition of at least one first photopolymerisable composition which can be activated by means of UV rays on the at least one leather (**P**) to be finished;
- first irradiation - with UV rays - of said at least one leather (**P**) including said at least one first photopolymerisable composition, so as to create a first layer (**L1**) of said at least one first composition at least partially polymerised on said at least one leather (**P**);
- second deposition - on the at least one leather (**P**) - including said first layer of at least one second photopolymerisable composition which can be activated by means of UV rays;
wherein said irradiation step is a second irradiation - with UV rays - of said at least one leather (**P**) including said at least one second photopolymerisable composition, so as to create - above said first layer (**L1**) - a second layer (**L2**) of said at least one second at least partially polymerised composition.

4. Method according to one or more of the preceding claims, wherein the deposition deposits - on said at least one leather (**P**) - one or more layers of said photopolymerisable composition in a homogeneous manner.

5. Method according to one or more of the preceding claims, wherein the spray deposition is carried out by means of at least one rotary turntable (**210**) provided with at least 12 arms (**220**), each of the latter including at least one spraying gun (**230**).

6. Method according to one or more of the preceding claims, wherein said deposition or first deposition step is carried out on said at least one substantially dry leather (**P**).

7. Method according to any one of the preceding claims, wherein the irradiation is carried out in at least one working chamber (**25**) by means of at least one UV-ray generating device (**40**) comprising a plurality of LEDs.

8. Method according to any one of the preceding claims, comprising a step for heating said at least one working chamber (**25**) to an operating temperature lower than 60 °C, preferably lower than 50 °C and even more preferably comprised between 20 °C and 50 °C.

## Patentansprüche

1. Verfahren zur Endbearbeitung von wenigstens einem gegerbten oder synthetischen Tierleder oder Leder tierischen Ursprungs (P), umfassend wenigstens die folgenden Schritte:
- Bereitstellen wenigstens eines Leders (P), welches zur Endbearbeitung vorgesehen ist;
- Bestrahlen des wenigstens einen zur Endbearbeitung vorgesehenen Leders (P) mit UV-Strahlen;
wobei das wenigstens eine Leder (P) zur Zeit des Bestrahlungsschritts wenigsten eine photopolymerisierbare Zusammensetzung umfasst, die mittels UV-Strahlen aktivierbar ist;
wobei der Bereitstellungsschritt wenigstens einen Schritt der Ablagerung -auf dem wenigstens einen Leder (P)- der wenigstens einen photopolymerisierbaren Zusammensetzung umfasst und der Bestrahlungsschritt nach dem Schritt der Abscheidung erfolgt;
**dadurch gekennzeichnet, dass** die Ablagerung -auf dem wenigstens einen Leder (P)- eine Ablagerung einer oder mehrerer Schichten der photopolymerisierbaren Zusammensetzung in gestreuter und nicht punktförmiger Art und Weise mittels Sprühen, Rollen, Glasieren oder Puffern umfasst, wobei die photopolymerisierbare Zusammensetzung eine wässrige Lösung oder Dispersion ist, die aus dem folgenden besteht:
(A) wenigstens eine photopolymerisierbare Zusammensetzung;
(B) wenigstens einem Photoaktivierungsmittel;
(C) möglicherweise wenigstens einem Vernetzungsmittel;
(D) möglicherweise wenigstens einem Pigmentierungsmittel;
(E) möglicherweise wenigstens einem weiteren Additiv.

2. Verfahren nach Anspruch 1, bei welchem die wenigstens eine photopolymerisierbare Zusammensetzung auf dem wenigstens einen Leder (P) in einer Menge aufgebracht wird, die zwischen 10 g/m² und 150 g/m² umfasst ist.

3. Verfahren nach einem der Ansprüche 1 oder 2, bei welchem der Bereitstellungsschritt wenigstens folgende Schritte umfasst:
- erste Ablagerung von wenigstens einer ersten photopolymerisierbaren Zusammensetzung, die durch UV-Strahlen auf dem zur Endbearbeitung vorgesehenen wenigstens einem Leder (P) aktivierbar ist;
- erste Bestrahlung-mit UV-Strahlen - des wenigstens einen Leders (P) umfassend die wenigstens eine erste photopolymerisierbare Zusammensetzung, um auf dem wenigstens einen Leder eine erste Schicht (L1) der wenigstens einen ersten Zusammensetzung zu erzeugen, die wenigstens teilweise polymerisiert ist;
- zweite Ablagerung - auf dem wenigstens einen Leder (P)- umfassend die erste Schicht wenigstens einer zweiten polymerisierbaren Zusammensetzung, die mittels UV-Strahlen aktivierbar ist;
wobei der Bestrahlungsschritt eine zweite Bestrahlung -mit UV-Strahlen- des wenigstens einen Leders (P), umfassend die wenigstens eine zweite polymerisierbare Zusammensetzung, ist, um -oberhalb der ersten Schicht (L1)- eine zweite Schicht (L2) der wenigstens einen wenigstens teilweise polymerisierten Zusammensetzung zu erzeugen.

4. Verfahren nach einem oder mehreren der vorhergehenden Ansprüche, bei welchem die Ablagerung -auf dem wenigstens einen Leder (P)- eine oder mehrere Schichten der photopolymerisierbaren Zusammensetzung in homogener Art und Weise ablagert.

5. Verfahren nach einem oder mehrerer der vorhergehenden Ansprüche, bei welchem die Sprühablagerung mittels wenigstens eines drehbaren Drehtischs (210) durchgeführt wird, der mit wenigstens 12 Armen (220) versehen ist, von welchen jeder wenigstens eine Sprühpistole (230) umfasst.

6. Verfahren nach einem oder mehrerer der vorhergehenden Ansprüche, wobei die Ablagerung oder der erste Ablagerungsschritt auf im Wesentlichen trockenem Leder (P) durchgeführt wird.

7. Verfahren nach einem der vorhergehenden Ansprüche, bei welchem die Bestrahlung in wenigstens einer Arbeitskammer (25) mittels einer UV-Strahlen erzeugenden Vorrichtung (40) durchgeführt wird, die eine Vielzahl von LEDs umfasst.

8. Verfahren nach einem der vorhergehenden Ansprüche, umfassend einen Schritt zur Beheizung der wenigstens einen Arbeitskammer (25) auf eine Betriebstemperatur unterhalb von 60 °C, vorzugsweise unterhalb von 50 °C und weiterhin bevorzugt zwischen 20 °C und 50 °C.

## Revendications

1. Un procédé de finissage d'au moins un cuir tanné ou synthétique ou d'un cuir d'origine animale (**P**), comprenant au moins les étapes suivantes :
• fournir ledit au moins un cuir (**P**) à finir ;
• irradier ledit au moins un cuir (**P**) à finir avec des rayons UV ;
dans lequel, au moment de ladite étape d'irradiation, ledit au moins un cuis (**P**) comprend au moins une composition photopolymérisable pouvant être activée par les rayons UV ;
dans lequel ladite étape de fourniture comprend au moins une étape de dépôt - sur ledit au moins un cuir (**P**) - de ladite composition photopolymérisable, l'étape d'irradiation étant mise en œuvre après ladite étape de dépôt ;
**caractérisé en ce que** le dépôt dépose - sur ledit au moins un cuir (**P**) - une ou plusieurs couches de ladite composition photopolymérisable de manière dispersée et diffuse par pulvérisation, rouleau, vernissage ou tampon, la composition photopolymérisable étant une solution aqueuse ou une dispersion comprenant :
(A) au moins un composé photopolymérisable ;
(B) au moins un agent photoactivant ;
(C) éventuellement, au moins un agent de réticulation ;
(D) éventuellement, au moins un agent pigmentant ;
(E) éventuellement, au moins un autre additif.

2. Le procédé selon la revendication 1, dans lequel ladite au moins une composition photopolymérisable est déposée sur ledit au moins un cuir (**P**) en une quantité comprise entre 10 g/m² et 150 g/m².

3. Le procédé selon la revendication 1 ou 2, dans lequel ladite étape de fourniture comprend au moins les étapes suivantes :
- premier dépôt d'au moins une première composition photopolymérisable pouvant être activée par des rayons UV sur ledit au moins un cuir (**P**) à finir ;
- première irradiation - avec des rayons UV - sur ledit au moins un cuir (**P**) comprenant ladite première composition photopolymérisable, de manière à créer une première couche (**L1**) de ladite première composition au moins partiellement polymérisée sur ledit au moins un cuir (**P**) ;
- deuxième dépôt - sur ledit au moins un cuir (**P**) - comprenant ladite première couche d'au moins une deuxième composition photopolymérisable pouvant être activée par des rayons UV ;
- dans lequel ladite étape d'irradiation est une deuxième irradiation - avec des rayons UV - du au moins un cuir (**P**) comprenant ladite deuxième composition photopolymérisable, de manière à créer - au-dessus de ladite première couche (**L1**) - une deuxième couche (**L2**) de ladite deuxième composition au moins partiellement polymérisée.

4. Le procédé selon une ou plusieurs des revendications précédentes, dans lequel le dépôt dépose - sur ledit au moins un cuir (**P**) - une ou plusieurs couches de ladite composition photopolymérisable de manière homogène.

5. Le procédé selon une ou plusieurs des revendications précédentes, dans lequel le dépôt par pulvérisation est mis en œuvre au moyen d'au moins une platine tournante (**210**) comprenant au moins 12 bras (**220**), chacun de ces bras comprenant au moins un pistolet de pulvérisation (**230**).

6. Le procédé selon une ou plusieurs des revendications précédentes, dans lequel ledit dépôt ou ladite première étape de dépôt est mise en œuvre sur ledit au moins un cuir (**P**) essentiellement sec.

7. Le procédé selon l'une quelconque des revendications précédentes, dans lequel l'irradiation est mise en œuvre dans au moins une chambre de travail (**25**) au moyen d'au moins un dispositif générateur de rayons UV (**40**) comprenant une pluralité de LED.

8. Le procédé selon l'une quelconque des revendications précédentes, comprenant une étape de chauffage de ladite chambre de travail (**25**) à une température de fonctionnement inférieure à 60 °C, de préférence inférieure à 50 °C et encore plus préférablement comprise entre 20 °C et 50 °C.
